# EUROPEAN PATENT SPECIFICATION

(11) **EP 0 505 110 B1**
(45) Date of publication and mention of the grant of the patent: **14.08.1996**
(21) Application number: 92302179.4
(22) Date of filing: 13.03.1992
(51) Int. Cl.: C08L 53/02, C08L 25/02

(54) **Hydrogenated vinyl aromatic hydrocarbon polymer composition and optical disc substrate**
Hydrierte vinylaromatische Polymerzusammensetzung und Träger für optische Platten
Composition des polymères aromatiques de vinyle hydrogenées et support de disque optique

(30) Priority: 18.03.1991 JP 52749/91
(43) Date of publication of application: 23.09.1992
(73) Proprietor: Mitsubishi Chemical Corporation, Chiyoda-ku Tokyo (JP)
(72) Inventor: Tanaka, Eiji, Kawasaki-shi, Kanagawa-ken (JP); Kato, Satoshi, Machida-shi, Tokyo (JP); Sato, Kaoru, Hakodate-shi, Hokkaido (JP)
(74) Representative: Woods, Geoffrey Corlett

(56) References cited:
- EP-A- 0 260 454
- JP-A- 3 160 051
- WORLD PATENTS INDEX LATEST Week 9126, Derwent Publications Ltd., London, GB; AN 91-188900 & JP-A-3 115 349

## Description

The present invention relates to a hydrogenated vinyl aromatic hydrocarbon resin composition having, for example, excellent transparency, heat resistance and adhesiveness to metals, and to an optical disc substrate comprising the composition.

Extensive studies have been made recently on optical recording techniques using a laser, as this allows high density recording of information, its storage and reproduction. A typical example of a storage device used in optical recording is an optical disc. Generally an optical disc basically comprises a transparent substrate and various recording media coated thereon.

Colorless and transparent synthetic resins are favorably used for the transparent substrate of an optical disc; preferred examples of such synthetic resins are polycarbonate (hereinafter abbreviated to PC), polymethyl methacrylate (hereinafter abbreviated to PMMA) and polystyrene (hereinafter abbreviated to PSt). These resins not only have colorless transparency but also possess their own excellent properties. However, these resins do not satisfy all the requirements of an optical material, especially of an optical disc substrate, and still have problems to be solved. For example, PC has defective birefringence properties due to its aromatic ring. It also has high water absorptivity and water permeability. PMMA has problems of heat resistance, water absorptivity and toughness. PSt, although having satisfactory water absorptivity and water permeability, has a very wide birefringent index and has poor heat resistance.

These resins are used in practice without the above technical defects having been overcome. Additionally new technical defects such as those mentioned later in relation to the recording media coated on transparent substrates made of the resins have been noted.

Various types of recording media have been developed following wide-ranging research depending on the use of the optical disc. For example, perforated-type recording media are used exclusively for recording and reproduction, which are called write once-type recording media. Examples of "erasable"-type recording media which are capable of recording, reproduction, erasion and re-recording, are phase transition-type recording media utilizing the phenomenon of crystal phase transition and photomagnetic-type recording media utilizing the photomagnetic effect. Tellurium oxides and tellurium-based alloy compounds are usually used for the "write once"-type recording media, and amorphous alloy compounds of rare earth and transition metals such as GdFe, TbFe, GdFeCo and TbFeCo, and inorganic materials are usually used for the "erasable"-type magnetic media. Generally, these magnetic media are made by forming a film of the material on a transparent substrate by a dry method such as sputtering under high vacuum.

The high hygroscopicity and water permeability of PC and PMMA cause technical defects. The high hygroscopicity gives rise to the problem of warp of the substrate due to its expansion on moisture absorption. The high water permeability of the materials also gives rise to the problem that corrosion of the magnetic medium is caused by water which gets into the medium through the substrate, resulting in a reduced service life of the optical disc.

With reference to heat resistance of the resins for the substrate, there exist the following technical problems. In the practical use of optical discs, especially "write once"-type and "erasable"-type discs, the temperature of the recording medium at the time of writing of record or erasure may reach 200°C or higher. The disc substrate may therefore be heated to a fairly high temperature at the time of writing of record or erasure, although the heat of the recording medium may not be directly applied to the substrate, and as a consequence there may be deformation of the substrate or the grooves when the resin used has low heat resistance.

In the production process of optical discs, there is often incorporated a heat treatment step to prevent change over time of the substrate or magnetic medium. However, to improve productivity, it is desirable that the heat treatment be conducted at as high a temperature as possible to minimize the treatment time.

Use of a resin with a low heat resistance makes it impossible to use a high treating temperature, making it impossible to raise productivity.

PSt and PMMA have low heat resistance and cannot endure high temperatures in the production process of optical discs or in the use thereof, and PC, having a high heat resistance, has exclusively been studied as an available material for a transparent substrate.

Use of a transparent resin with a high softening point and which is principally composed of carbon and hydrogen, is known as a resin to overcome the defects of the conventional resins such as PC, PMMA and PSt. A hydrogenated vinyl aromatic hydrocarbon polymer is proposed in JP-A-89/318015.

However, this hydrogenated vinyl aromatic hydrocarbon polymer, having no exception to the inherent low adhesiveness of polyolefins, has a technical defect in that it has poor adhesion to the recording film and is incapable of satisfying the requirement for a long life of the optical disc.

EP-A-260,454 discloses a thermoplastic moulding composition comprising:
A) 98 to 80% by weight of a polymer containing styrene or a substituted styrene; and
B) 2 to 20% by weight of a block copolymer of linear, hydrogenated styrene and butadiene; wherein the total styrene content of polymer B is 40 to 60% by weight based on polymer B, and from 5 to 25% by weight of polymer (B) is in the form of block polystyrene and the remainder of the styrene is incorporated randomly in from 60 to 40% by weight of hydrogenated butadiene, the polymer B having a mean molecular weight (weight average) of 50,000 to 200,000.

It has now surprisingly been found that, by using as a raw material for the substrate, a hydrogenated vinyl aromatic hydrocarbon polymer composition obtainable by blending a hydrogenated vinyl aromatic hydrocarbon polymer having a specified hydrogenation degree and a hydrogenated vinyl aromatic hydrocarbon-conjugated diene block copolymer having a specified composition ratio and hydrogenation degree, an optical disc substrate having excellent adhesiveness to the recording layer while maintaining the high heat resistance which hydrogenated vinyl aromatic hydrocarbon polymers inherently possess, can be obtained.

The present invention provides a hydrogenated vinyl aromatic hydrocarbon polymer composition comprising:
(a) 5 to 90% by weight of a hydrogenated polymer (A) obtainable by hydrogenating a vinyl aromatic hydrocarbon-conjugated diene block copolymer in such an amount that substantially all the double bonds derived from the conjugated diene bonds and from 60 mol% to less than 80 mol% of the double bonds in the aromatic rings have been hydrogenated, the content of the conjugated diene polymer units in the block copolymer being from 1 to 50 wt%; and
(b) 10 to 95% by weight of a hydrogenated polymer (B) obtainable by hydrogenating a vinyl aromatic hydrocarbon polymer in such an amount that from 60 mol% to less than 80 mol% of the double bonds in the aromatic rings have been hydrogenated.

The present invention also provides an optical disc substrate molded from a composition as defined above.

A principal component (component (a)) of the hydrogenated vinyl aromatic hydrocarbon polymer composition of the present invention is a hydrogenated vinyl aromatic hydrocarbon-conjugated diene block copolymer (polymer (A)).

As the vinyl aromatic hydrocarbon monomer which provides the vinyl aromatic hydrocarbon polymer units in the vinyl aromatic hydrocarbon-conjugated diene block copolymer, there can be used, for instance, styrene, p-methylstyrene, α-methylstyrene or a mixture thereof. Among these, styrene is preferred.

The vinyl aromatic hydrocarbon polymer unit may be constituted by a homopolymer of one vinyl aromatic hydrocarbon or a copolymer of two or more vinyl aromatic hydrocarbons. Other monomer(s) copolymerizable with said vinyl aromatic hydrocarbons may be contained within limits not substantially affecting the properties of the vinyl aromatic hydrocarbon polymer used. As such monomers, acrylic acid, acrylic ester, methacrylic acid, methacrylic ester, maleic acid, maleic anhydride, acrolein, vinyl esters, vinyl ethers, vinyl ketones and acrylonitrile may be exemplified.

As the conjugated diene monomer in the conjugated diene polymer units, there can be used, for instance, 1,3-butadiene, isoprene, 2,3-dimethyl-1,3-butadiene, 1,3-pentadiene, 1,3-hexadiene or a mixture thereof. Usually, 1,3-butadiene and isoprene are preferred.

A block copolymer composed of these two types of units can be easily obtained by a known method, the so-called living anionic polymerization method. For example, a polymerization method comprising polymerizing these two types of units in a hydrocarbon solvent such as hexane or heptane in the presence of an organolithium compound as polymerization initiator, can be used.

The content of the conjugated diene polymer units in said block copolymer is 1 to 50 wt%, preferably 5 to 30 wt%.

If the content of the conjugated diene polymer units in the block copolymer exceeds 50 wt%, the composition is deteriorated in heat resistance and rigidity, and is not suitable for making the desired optical disc substrate. If the content is less than 1 wt%, the composition is deteriorated in fluidity and toughness.

The number-average molecular weight of said vinyl aromatic hydrocarbon-conjugated diene block copolymer is generally 30,000 to 400,000, preferably 50,000 to 400,000.

A hydrogenated vinyl aromatic hydrocarbon-conjugated diene block copolymer used as component (a) of the composition according to the present invention can be obtained by hydrogenating the block copolymer described above in the presence of a hydrogenating catalyst having aromatic hydrogenating activity. As the hydrogenating catalyst, there can be used metals such as nickel, cobalt, ruthenium, rhodium, platinum, palladium, their oxides, their salts or their complexes. These metals, oxides, salts or complexes may, for example, be carried on a carrier such as activated carbon, diatomaceous earth, silica or alumina. Among them, Raney (Trade Mark) nickel, Raney (Trade Mark) cobalt, stabilized nickel, carbon- or alumina-carried ruthenium, rhodium or platinum, and carbon- or silica-carried palladium are preferred in view of their reactivity.

The hydrogenation reaction is preferably carried out using a saturated hydrocarbon solvent such as cyclohexane, methylcyclohexane, n-octane, decalin, tetralin, naphtha or an ether solvent such as tetrahydrofuran under a pressure of 50 to 250 kg/cm² at a temperature of 10 to 200°C . The hydrogenation degree of the double bonds derived from the conjugated diene segments is substantially complete, preferably not less than 98 %, more preferably not less than 99 %, most preferably 100%.

The hydrogenation degree of double bonds of the aromatic ring is not less than 60 mol% and less than 80 mol%, preferably 60 to 75 mol%. If the hydrogenation degree of the aromatic ring is more than 80 mol%, adhesion to the recording medium becomes defective, giving rise to problems of long-time durability. If the hydrogenation degree of the aromatic ring is less than 60 mol%, there arise problems such as reduction of heat resistance, increase of birefringence index and deterioration of compatibility with component (b).

The number-average molecular weight of the thus obtained hydrogenated vinyl aromatic hydrocarbon-conjugated diene block copolymer used as component (a) is lowered during the hydrogenation process and is generally 20,000 to 300,000, preferably 50,000 to 200,000, more preferably 80,000 to 150,000. If the molecular weight is less than 20,000, the composition lacks strength, and if the molecular weight exceeds 300,000, the composition is deteriorated in moldability and optical uniformity.

Another principal component (component (b)) of the hydrogenated vinyl aromatic hydrocarbon polymer composition according to the present invention is a hydrogenated vinyl aromatic hydrocarbon polymer.

As the vinyl aromatic hydrocarbon polymer used as the raw material for said component (b), there can be empolyed the same polymers as those of the vinyl aromatic hydrocarbon polymer units of component (a). Any polymerization method can be used as far as it is capable of producing an amorphous polymer. Usually radical polymerization or anionic polymerization is used. The number-average molecular weight of said vinyl aromatic hydrocarbon polymer is not less than 50,000. If it is less than 50,000,the resin obtained after hydrogenation is deteriorated in heat resistance and toughness.

The upper limit of the number-average molecular weight of said polymer is generally not more than 400,000, preferably not more than 200,000.

The vinyl aromatic hydrocarbon polymer is subjected to aromatic ring hydrogenation in the same way as the hydrogenation conducted in the preparation of component (a) described above.

The hydrogenation degree of the double bonds of the aromatic ring in the hydrogenation reaction is not less than 60 and less than 80 mol%, preferably 60 to 75 mol%. If the hydrogenation degree is less than 60 mol%, the heat resistance is reduced and the birefringence index of the optical material is increased. If the hydrogenation degree is not less than 80 mol%, adhesion to the recording film becomes weak.

The number-average molecular weight of the thus obtained hydrogenated vinyl aromatic hydrocarbon polymer is lowered during the hydrogenation process and is generally 40,000 to 300,000, preferably 60,000 to 150,000.

If the number-average molecular weight is less than 40,000, the composition lacks strength, while if the number-average molecular weight exceeds 300,000, the composition is deteriorated in moldability and optical uniformity.

In the composition of the present invention, the content of component (a) is 5 to 90 wt%, preferably 15 to 50 wt%, and that of component (b) is 10 to 95 wt%, preferably 50 to 85 wt%. The content of the conjugated diene polymer units in the composition of the present invention is generally 1 to 40 wt%, preferably 1 to 20 wt%, more preferably 2 to 10 wt%.

The method of mixing of said components is not specified. Usually there is employed a method in which said components are dissolved in a solvent and then coprecipitated by supplying a poor solvent or by distilling off the solvent, or a method in which said components are subjected to melt-mixing by an extruder, Brabender plastopgraph or a kneading machine such as Banbury mixer. A method in which said components are mixed with a solution and then subjected to melt-mixing is also employable.

As the solvent used in the mixing method, tetrahydrofuran, decahydronaphthalene, cyclohexane and methyl cyclohexane may be exemplified. As the poor solvent, methanol, ethanol, propanol and water may be exemplified.

A hydrocarbon having a number-average molecular weight of 500 to 5,000 may be added to the polymer composition obtained in the manner described above, for example to improve the moldability, within limits not affecting the heat resistance and optical uniformity of the composition.

Examples of such a hydrocarbon are low-molecular weight hydrocarbon polymers having a glass transition point higher than room temperature, such as hydrogenated petroleum resins, hydrogenated terpene resins and hydrogenated low-molecular weight styrene polymers, and high-boiling point hydrocarbon oils which are liquid at room temperature, such as alkylbenzene and alkylnaphthalene. The amount of the hydrocarbon added is not more than 10 wt%, preferably 0.1 to 5 wt%.

In the present invention, a heat stabilizer is usually added to the obtained polymer composition and then the resultant composition is molded.

As the heat stabilizer, there can be used, for instance, hindered phenolic heat stabilizers, sulfur-based heat stabilizers and phosphorus-based heat stabilizers. Joint use of a hindered phenolic heat stabilizer and a phosphorus-based heat stabilizer is preferred to provide an extra improvement in the resistance to heat deterioration.

As the hindered phenolic heat stabilizers usable in the present invention, tetrakis [methylene-3-(3,5-di-t-butyl-4-hydroxyphenyl)propionate]methane, 3,9-bis[1,1-dimethyl-2- {β-(3-t-butyl-4-hydroxy-5-methylphenyl) propionyloxy} ethyl]-2,4,8,10-tetraoxapyro[5,5]undecane, 1,3,5-tris(3,5-di-t-butyl-4-hydroxy-benzyl)-s-triazine-2,4,6 (1H, 3H, 5H)-trione and 1,3,5-trimethyl-2,4,6-tris(2,5-di-t-butyl-4-hydroxybenzyl)-benzene may be exemplified.

As the sulfur-based heat stabilizers usable in the present invention, tetrakis [methylene-3-(dodecylthio) propionate]methane and distearylthio dipropionate may be exemplified.

As the phosphorus-based heat stabilizers usable in the present invention, tetrakis(2,4-di-t-butylphenyl)-4-4'-biphenylene phosphonite and bis(2,6-di-t-butyl-4-methylphenyl)pentaerythritol-di-phosphite may be exemplified.

The content of the heat stabilizer in the polymer composition is generally to 0.01 % by weight, preferably 0.05 to 0.5 % by weight.

It is preferred to suppress the generation of foreign matter on the surface of the disc substrate by using a metal salt of a long-chain fatty acid jointly as an additive with the heat stabilizer.

As the metal salt of a long-chain fatty acid usable in the present invention, one represented by the following formula may be exemplified: 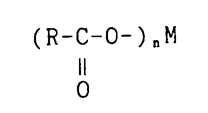 wherein R represents an alkyl group having 12 to 30 carbon atoms, M represents a divalent or trivalent metal ion and n represents 1, 2 or 3, which corresponds to the valency of 11.

As the long-chain fatty acid, lauric acid, myristic acid, palmitic acid, stearic acid and behenic acid are preferred. Stearic acid is more preferred.

As the metal ion, Mg ion, Ca ion, Zn ion, Pd ion, Sr ion and Al ion are preferred, Ca ion and Zn ion are more preferred, and Zn ion is most preferred.

The content of the additive in the polymer composition is generally not more than 1 % by weight, preferably 0.01 to 0.5 % by weight.

The method of mixing the polymer composition of the present invention with the heat stabilizer and additive is not specified, but usually the polymer composition, heat stabilizer and additive are first mixed by a suitable mixer such as a ribbon blender, tumble blender or Henschel mixer and then the resultant mixture is melt-kneaded and formed into pellets by using a Banbury mixer, single-screw extruder, double-screw extruder or other suitable means. The thus obtained pellets are subjected to injection molding at a temperature of 270-350°C, preferably 280-310°C, thereby obtaining an optical disc substrate which is excellent in transparency and heat resistance, free of tinting and which has very little optical distortion.

The optical disc substrate of the present invention thus obtained has a low birefringence index, the values thereof measured at different portions in said substrate being not more than 45 nm, preferably not more than 40nm. Light transmittance of said substrate is not less than 85 %, preferably not less than 90 %.

For producing an optical disc by using an optical disc substrate of the present invention, a method in which a coating film of SiNx, TaOx or other suitable material is formed on the surface of said substrate by sputtering, deposition or other means, then a recording layer of TbFeCo or other suitable material is formed on said coating film and finally the thus-formed laminate is covered with a protective film, can be employed.

In the following peel test, checkered test pieces (1 mm x 1 mm ) having not more than 5 in 100 test pieces peeled off with tape are required. For practical use it is preferred that no checkered test pieces (1 mm x 1 mm ) are peeled off with tape.

The coating films are formed on the substrate obtained from the hydrogenated vinyl aromatic hydrocarbon polymer composition according to the present invention. Lines are drawn at a rate of 10 lines per 1 cm x 1cm area at the part constituting the specular surface of the substrate provided with said coating films, and an adhesive tape (imide film base, made by Teraoka Co., Ltd.) is pasted on the checkered portion of the substrate. The adhesive strength between the substrate and the coating film is evaluated by peeling off the tape (peel test).

Since the optical disc substrate made from a polymer composition of the present invention has excellent adhesion to the recording medium, a long service life of the optical disc is secured. Also, as the optical disc substrate according to the present invention has a low birefringence index, it is suited for use as an optical disc substrate or other optical materials.

The polymer composition of the present invention, owing to its excellent heat resistance and optical properties, finds use as a molding material for various optical articles such as optical lenses or optical cards, in addition to the optical discs described above. In these uses, excellent adhesiveness of the polymer composition of the present invention proves advantageous.

### EXAMPLES

The present invention is now described in further detail in the following Examples, Resin Preparation Examples and Comparative Examples.

The various properties referred to in the following Examples and Comparative Examples were determined by the methods described below.

### (1) Number-average molecular weight:

This was measured by gel permeation chromatograph (GPC) using tetrahydrofuran (THF) as the solvent in the same way as when using polystyrene, and the number-average molecular weight calculated as the polystyrene basis was determined.

### (2) Aromatic ring hydrogenation degree (%):

A polyvinylcyclohexane-type resin was dissolved in tetrahydrofuran, and the aromatic ring hydrogenation degree was determined by UV absorption.

### (3) Glass transition point (°C ):

Measured by using a differential scanning calorimeter Model 9900 manufactured by E.I. Du Pont de Nemours & Co.

### (4) High-temperature, high-humidity test:

An optical disc substrate bearing a recording medium was placed in a thermo-humidistat maintained at 85°C and 85 % RH, and after keeping in the thermo-humidistat for 200 hours, adhesion of the recording film was evaluated.

### (5) Birefringence index:

Determined by using a condensing birefringent meter ELP-300AFB manufactured by Mizojiri Optical Industries Co., Ltd.

### Resin Preparation Example 1

A styrene homopolymer (HH-102 produced by Mitsubishi Monsanto Chemical Co., Ltd., number-average molecular weight ($\overline{\text{M}}$n) : 100,000) was dissolved in tetrahydrofuran, and the resultant solution was added with 5 % Pd/SiO₂ as catalyst and subjected to a hydrogenation reaction at 170°C under a hydrogen pressure of 100 kg/cm² for.6 hours to obtain a hydrogenated polystyrene having a number-average molecular weight of 90,000 and an aromatic-ring hydrogenation degree of 70.0 %.

### Resin Preparation Example 2

A styrene-butadiene block copolymer ($\overline{\text{M}}$n: 100,000, butadiene content:15 wt%) obtained by anionic polymerization was hydrogenated according to the same method as in Resin Preparation Example 1, except that the hydrogen pressure was 70 kg/cm², to obtain a hydrogenated styrene-butadiene block copolymer having a number-average molecular weight of 95,000, a hydrogenation degree of double bonds derived from the conjugated diene bonds of 100 % and an aromatic-ring hydrogenation degree of 73.0 %.

### Resin Preparation Example 3

A styrene homopolymer ($\overline{\text{M}}$n: 60,000) was dissolved in tetrahydrofuran and the resultant solution was added with 5% Pd/SiO₂ as catalyst and subjected to a hydrogenation reaction at 170°C for 4 hours under a hydrogen pressure of 95 kg/cm² to obtain a hydrogenated poylstyrene having a number-average molecular weight of 51,000 and an aromatic-ring hydrogenation degree of 79 %.

### Resin Preparation Example 4

A styrene-butadiene block copolymer ($\overline{\text{M}}$n: 125,000, butadiene content:20 wt%) was hydrogenated in the same way as in Resin Preparation Example 2 to obtain a hydrogenated styrene-butadiene block copolymer having a number-average molecular weight of 106,000, a hydrogenation degree of double bonds derived from the conjugated diene bonds of 100 % and an aromatic-ring hydrogenation degree of 72.0 %.

### Resin Preparation Example 5

The same styrene homopolymer as used in Resin Preparation Example 1 was hydrogenated by the same procedure of Resin Preparation Example 1, except that the hydrogenation time was 8 hours, to obtain a hydrogenated polystyrene having a number-average molecular weight of 75,000 and an aromatic-ring hydrogenation degree of 99 %.

### Resin Preparation Example 6

The same styrene homopolymer as used in Resin Preparation Example 1 was hydrogenated by the same procedure of Resin Preparation Example 1, except that the hydrogenation time was 7 hours,to obtain a hydrogenated polystyrene having a number-average molecular weight of 87,000 and an aromatic-ring hydrogenation degree of 85 %.

### Resin Preparation Example 7

The same styrene-butadiene block copolymer as used in Resin Preparation Example 2 was hydrogenated by the same procedure of Resin Preparation Example 2, except that the hydrogenation time was 8 hours, to obtain a hydrogenated styrene-butadiene block copolymer having a number-average molecular weight of 91,000, a hydrogenation degree of double bonds derived from the conjugated diene bonds of 100 % and an aromatic-ring hydrogenation degree of 83 %.

### Resin Preparation Example 8

The same styrene homopolymer as used in Resin Preparation Example 1 was hydrogenated by the same procedure of Resin Preparation Example 1, except that the hydrogenation time was 5 hours,to obtain a hydrogenated polystyrene having a number-average molecular weight of 93,000 and an aromatic-ring hydrogenation degree of 62 %.

### Resin Preparation Example 9

The same styrene-butadiene block copolymer as used in Resin Preparation Example 2 was hydrogenated by the same procedure of Resin Preparation Example 2,except that the hydrogenation time was 5 hours, to obtain a hydrogenated styrene-butadiene block copolymer having a number-average molecular weight of 98,000, a hydrogenation degree of double bonds derived from the conjugated diene bonds of 100 % and an aromatic-ring hydrogenation degree of 60 %.

### Example 1

7.50 kg of the polymer obtained in Resin Preparation Example 1 and 5.0 kg of the polymer obtained in Resin Preparation Example 2 were dissolved in tetrahydrofuran and then coprecipitated in methanol. To the thus obtained wet powder were added 0.1 part by weight of 1,3,5-trimethyl-2,4,6-tris-(3,5-di-t-butyl-4-hydroxybenzyl) benzene (Irganox 1330 (Trade Mark) produced by Ciba Geigy) 0.1 part by weight of (2,6-di-t-butyl-4-methylphenyl)pentaerythritol diphosphite (MARKPEP-36, (Trade Mark), produced by ADEKA ARGUS CHEMICAL Co., Ltd.) and 0.1 part by weight of zinc stearate, followed by drying. Then the resultant mixture was melt-kneaded at 260°C and pelletized by using an extruder.

The thus-obtained pellets were subjected to injection molding at a resin temperature of 300°C using an injection molder M-140A (manufactured by Meiki Co., Ltd.) with a grooved stamper mounted to the movable platen side, to mold a disc-shaped optical disc substrate having a thickness of 1.2 mm and a diameter of 130 mm.

The glass transition temperature of the polymer composition was 131°C .

The obtained substrate was placed in a sputtering device. First, the sputter chamber was evacuated to not more than 1.1 × 10⁻⁴Pa (8 x 10⁻⁷ Torr) and reactive sputtering of the Ta target was carried out using an Ar/O₂ mixed gas to form an interference layer (800 Å thick) composed of Ta₂O₅. This was followed by binary simultaneous sputtering of the Tb target and FeCo target using Ar gas to form a recording layer (300Å thick) of TbFeCo. Then, the Al target having the Ti chips disposed thereon was sputtered in Ar gas to form a reflective layer (300Å thick). Lines were drawn at a rate of 10 lines per 1 cm x 1 cm area at the part constituting the specular surface of the substrate provided with said coating films, and an adhesive tape (imide film base, made by Teraoka Co., Ltd.) was pasted on the checkered portion of the substrate. The adhesive strength between the substrate and the tantalum oxide film was evaluated by peeling off the tape (peel test). None of the 100 checkered test pieces (1 mm x 1 mm) was peeled off with the tape.

A similar adhesive strength test (peel test) was conducted after subjecting said substrate to a high-temperature and high-humidity exposure test. In this test, too, none of the 100 checkered test pieces (1 mm x 1 mm) was peeled off.

The birefringence index measured at any point in the 25 to 55 mm area from the center of the substrate was not more than 40 nm.

### Example 2

12.0 kg of the hydrogenated polymer obtained in Resin Preparation Example 3 and 4.0 kg of the hydrogenated polymer obtained in Resin Preparation Example 4 were treated in the same way as Example 1 for pelletization, injection molding and sputtering. The glass transition point of the polymer composition was 135°C. In the peel test, none of the 100 test pieces was peeled off either before or after the high-temperature and high-humidity exposure test.

The birefringence index measured at any point in the 25 to 55 mm area from the center of the substrate was not more than 40 nm.

### Comparative Example 1

To 15.0 kg of the polymer obtained in Resin Preparation Example 5 were added the same additives used in Example 1 and the resultant mixture was treated in the same way as Example 1 for pelletization, injection molding and sputtering. The glass transition point of the polymer composition was 146°C .

In the peel test, all of the 100 test pieces were peeled off.

The birefringence index measured at any point in the 25 to 55 mm area from the center of the substrate was not more than 40 nm.

### Comparative Example 2

To 15.0 kg of the polymer obtained in Resin Preparation Example 1 were added the same additives used in Example 1 and the resultant mixture was treated in the same way as Example 1 for pelletization, injection molding and sputtering. The glass transition point of the polymer composition was 133°C.

In the peel test, none of the test pieces was peeled off either before or after the high-temperature and high-humidity exposure test. The birefringence index measured at

any point in the 25 to 55 mm area from the center of the substrate was 50-150 nm.

### Comparative Example 3

7.50 kg of the polymer obtained in Resin Preparation Example 6 and 5.0 kg of the polymer obtained in Resin Preparation Example 7 were dissolved in tetrahydrofuran and then coprecipitated in methanol. The resultant wet powder was treated in the same way as Example 1 for pelletization, injection molding and sputtering. The glass transition point of the polymer composition was 135°C.

In the peel test, none of the 100 test pieces was peeled off before the high-temperature and high-humidity exposure test, and 25 pieces in the 100 test pieces were peeled off after the high-temperature and high-humidity exposure test.

The birefringence index measured at any point in the 25 to 55 mm area from the center of the substrate was not more than 40 nm.

### Example 3

7.50 kg of the polymer obtained in Resin Preparation Example 8 and 5.0 kg of the polymer obtained in Resin Preparation Example 9 were dissloved in tetrahydrofuran and then coprecipitated in methanol. The resultant wet powder was treated in the same way as Example 1 for pelletization, injection molding and sputtering. The glass transition point of the polymer composition was 121°C . In the peel test, none of the 100 test pieces was peeled off either before or after the high-temperature and high-humidity exposure test.

The birefringence index measured at any point in the 25 to 55 mm area from the center of the substrate was not more than 40 nm.

## Claims

1. A hydrogenated vinyl aromatic hydrocarbon polymer composition comprising:
(a) 5 to 90% by weight of a hydrogenated polymer (A) obtainable by hydrogenating a vinyl aromatic hydrocarbon-conjugated diene block copolymer in such an amount that substantially all the double bonds derived from the conjugated diene bonds and from 60 mol% to less than 80 mol% of the double bonds in the aromatic rings have been hydrogenated, the content of the conjugated diene polymer units in the block copolymer being from 1 to 50 wt%; and
(b) 10 to 95% by weight of a hydrogenated polymer (B) obtainable by hydrogenating a vinyl aromatic hydrocarbon polymer in such an amount that from 60 mol% to less than 80 mol% of the double bonds in the aromatic rings have been hydrogenated.

2. A composition according to claim 1 which comprises from 15 to 50% by weight of polymer (A) and from 50 to 85% by weight of polymer (B).

3. A composition according to claim 1 or 2 wherein the content of the conjugated diene polymer units in the composition is from 1 to 40 wt%.

4. A composition according to any one of the preceding claims wherein the number-average molecular weight of polymer (A) is from 20,000 to 300,000.

5. A composition according to any one of the preceding claims wherein the number-average molecular weight of polymer (B) is from 40,000 to 300,000.

6. A composition according to any one of the preceding claims which further comprises not more than 10% by weight of a hydrocarbon having a number-average molecular weight of from 500 to 5,000.

7. A composition according to claim 6 wherein the hydrocarbon is a low-molecular weight hydrocarbon polymer having a glass transition point higher than room temperature or a high-boiling point hydrocarbon oil which is liquid at room temperature.

8. A composition according to any one of the preceding claims wherein the vinyl aromatic hydrocarbon units in polymer (A) and polymer (B) are obtainable from styrene, p-methylstyrene, α-methylstyrene or a mixture thereof.

9. A composition according to any one of the preceding claims wherein the conjugated diene units in polymer (A) are obtainable from 1,3-butadiene, isoprene, 2,3-dimethyl-1,3-butadiene, 1,3-pentadiene, 1,3-hexadiene or a mixture thereof.

10. An optical disc substrate molded from a composition as defined in any one the preceding claims.

## Patentansprüche

1. Masse aus einem hydrierten vinylaromatischen Kohlenwasserstoff-Polymeren, enthaltend:
(a) 5 bis 90 Gew.-% eines hydrierten Polymeren (A), erhältlich durch Hydrieren eines Blockcopolymeren aus einem vinylaromatischen Kohlenwasserstoff und einem konjugierten Dien derart, daß im wesentlichen alle Doppelbindungen, die sich von den konjugierten Dienbindungen ableiten, und 60 Mol-% bis weniger als 80 Mol-% der Doppelbindungen in den aromatischen Ringen hydriert worden sind, wobei der Gehalt der konjugierten Dienpolymereinheiten in dem Blockcopolymeren 1 bis 50 Gew.-% beträgt; und
(b) 10 bis 95 Gew.-% eines hydrierten Polymeren (B), erhältlich durch Hydrieren eines vinylaromatischen Kohlenwasserstoff-Polymeren derart, daß 60 Mol-% bis weniger als 80 Mol-% der Doppelbindungen in den aromatischen Ringen hydriert worden sind.

2. Masse nach Anspruch 1, dadurch **gekennzeichnet**, daß sie 15 bis 50 Gew.-% Polymeres (A) und 50 bis 85 Gew.-% Polmyeres (B) enthält.

3. Masse nach Anspruch 1 oder 2, dadurch **gekennzeichnet**, daß der Gehalt der konjugierten Dienpolymereinheiten in der Masse 1 bis 40 Gew.-% beträgt.

4. Masse nach einem der vorstehenden Ansprüche, dadurch **gekennzeichnet** , daß das zahlenmittlere Molekulargewicht des Polymeren (A) 20.000 bis 300.000 beträgt.

5. Masse nach einem der vorstehenden Ansprüche, dadurch **gekennzeichnet** , daß das zahlenmittlere Molekulargewicht des Polymeren (B) 40.000 bis 300.000 beträgt.

6. Masse nach einem der vorstehenden Ansprüche, dadurch **gekennzeichnet** , daß sie weiterhin nicht mehr als 10 Gew.-% eines Kohlenwasserstoffs mit einem zahlenmittleren Molekulargewicht von 500 bis 5.000 enthält.

7. Masse nach Anspruch 6, dadurch **gekennzeichnet**, daß der Kohlenwasserstoff ein Kohlenwasserstoff-Polymeres mit niedrigem Molekulargewicht mit einem Glasübergangspunkt von höher als Raumtemperatur oder ein Kohlenwasserstofföl mit hohem Siedepunkt, das bei Raumtemperatur flüssig ist, ist.

8. Masse nach einem der vorstehenden Ansprüche, dadurch **gekennzeichnet**, daß die vinylaromatischen Kohlenwasserstoffeinheiten in dem Polymeren (A) und dem Polymeren (B) aus Styrol, p-Methylstyrol, α-Methylstyrol oder einem Gemisch davon erhältlich sind.

9. Masse nach einem der vorstehenden Ansprüche, dadurch **gekennzeichnet**, daß die konjugierten Dieneinheiten in dem Polymeren (A) aus 1,3-Butadien, Isopren, 2,3-Dimethyl-1,3-butadien, 1,3-Pentadien, 1,3-Hexadien oder einem Gemisch davon erhältlich sind.

10. Optisches Scheibensubstrat, dadurch **gekennzeichnet**, daß es aus einer Masse nach einem der vorstehenden Ansprüche geformt ist.

## Revendications

1. Composition de polymère vinylique hydrocarboné aromatique hydrogéné, comprenant:
(a) 5 à 90% en poids d'un polymère hydrogéné (A) qui peut être obtenu en hydrogénant un copolymère vinylique hydrocarboné aromatique séquencé hydrogéné à base de diène conjugué dans une quantité telle que pratiquement la totalité des doubles liaisons dérivées des liaisons du diène conjugué et de 60% en moles jusqu'à moins de 80% en moles des doubles liaisons dans les cycles aromatiques sont hydrogénées, la teneur en motifs diène conjugué du copolymère séquencé étant comprise entre 1 et 50% en poids; et
(b) 10 à 95% en poids d'un polymère hydrogéné (B) qui peut être obtenu en hydrogénant un polymère vinylique hydrocarboné aromatique dans une quantité telle que de 60% en moles jusqu'à moins de 80% en moles des doubles liaisons dans les cycles aromatiques sont hydrogénées.

2. Composition selon la revendication 1, comprenant entre 15% et 50% en poids de polymère (A) et entre 50% et 85% en poids de polymère (B).

3. Composition selon la revendication 1 ou 2, dans laquelle la teneur en motifs diène conjugué de la composition est comprise entre 1% et 40% en poids.

4. Composition selon l'une quelconque des revendications précédentes, dans laquelle le poids moléculaire moyen en nombre du polymère (A) est compris entre 20.000 et 300.000.

5. Composition selon l'une quelconque des revendications précédentes, dans laquelle le poids moléculaire moyen en nombre du polymère (B) est compris entre 40.000 et 300.000.

6. Composition selon l'une quelconque des revendications précédentes, comprenant en outre pas plus de 10% en poids d'un hydrocarbure ayant un poids moléculaire moyen en nombre compris entre 500 et 5.000.

7. Composition selon la revendication 6, dans laquelle l'hydrocarbure est un polymère hydrocarboné de bas poids moléculaire ayant une température de transition vitreuse supérieure à la température ambiante ou bien une huile d'hydrocarbure à point d'ébullition élevé qui est liquide à la température ambiante.

8. Composition selon l'une quelconque des revendications précédentes, dans laquelle les motifs vinyliques aromatiques dans le polymère (A) et le polymère (B) peuvent être obtenues à partir du styrène, du p-méthylstyrène, de l'α-méthylstyrène ou d'un mélange de ceux-ci.

9. Composition selon l'une quelconque des revendications précédentes, dans laquelle les motifs de diène conjugué dans le polymère (A) peuvent être obtenues à partir du 1,3-butadiène, de l'isoprène, du 2,3-diméthyl-1,3-butadiène, du 1,3-pentadiène, du 1,3-hexadiène ou d'un mélange de ceux-ci.

10. Substrat de disque optique moulé à partir d'une composition telle que définie dans l'une quelconque des revendications précédentes.
